# EUROPEAN PATENT APPLICATION

(11) **EP 1 933 071 A2**
(43) Date of publication of application: **18.06.2008**
(21) Application number: 07150025.0
(22) Date of filing: 14.12.2007
(51) Int. Cl.: F16K 15/02

(54) **A feed fluid valve, an actuating method of the valve, a machine for the preparation of hot beverages comprising such valve and an actuating method of such machine**

(30) Priority: 14.12.2006 IT MI20062401
(71) Applicant: R.P.E. S. r. l., 22070 Carbonate (IT)
(72) Inventor: Ravazzani, Giuliano, 21049 Tradate (IT)
(74) Representative: Jorio, Paolo

(57) **Abstract**

A fluid feeding valve (1) presents a valve body (2); a feeding pipe (7) having a passage cross section (14); a delivery pipe (8); and a chamber (6) obtained in the valve body (2) and to which the feeding pipe (7) and the delivery pipe (8) lead; a slider (4) mobile along an axis (A); a shutter (20) coupled to the slider (4) and adapted to close the feeding pipe (7); an elastic element (18) for maintaining the shutter (20) in the closing position; the slider (4) and the shutter (20) being shaped so as to be displaced along the axis (A) from a closing position to an opening position only by the fluid pressure in the feeding pipe (7) and to be maintained in the opening position only by the fluid pressure inside the chamber (6).

## Description

The present invention relates to a fluid feed valve.

Specifically, the present invention relates to a fluid feed valve of the normally closed type and for an electric household appliance.

The use of fluids, such as for example hot water or steam, has many applications in the electric household appliance field, such as for example in the fields of irons, of steam jet surface cleaners, of espresso coffee machines and, more in general, of machines for the preparation of hot beverages contemplating the use of pods.

Each of these electric household appliances comprises a boiler or other steam or hot water generating device, a steam or water distribution circuit, and a feed solenoid valve controlled by the operator to feed either the steam or the hot water to a dispenser.

At the same time, electric household appliances are generally equipped with safety valves for evacuating the steam or hot water when the pressure of the latter exceeds a predetermined pressure value.

The feed valves are solenoid valves which comprise a valve body in which passage section is obtained, a shutter adapted to close the passage section and a control solenoid of a mobile slider connected to the shutter to selectively displace the shutter between a closing position and an opening position according to the electric current sent to the solenoid.

The aforementioned type of solenoid valve is effective and widely tested. However, it is particularly expensive and requires electric controls.

It is the object of the present invention to make a feed valve of a fluid which is free from the drawbacks of the known art and which, at the same time, may be used as both a feed valve and a safety valve.

According to the present invention, a steam feed valve is made according to claim 1.

The present invention relates to an actuating method of a fluid feed valve.

According to the present invention, there is provided an actuating method of a fluid feed valve according to claim 12.

The present invention relates to a machine for the preparation of hot beverages.

According to the present invention, there is made a machine for the preparation of hot beverages according to claim 13.

The present invention further relates to an actuating method of a machine for the preparation of hot beverages.

According to the present invention, there is provided an actuating method of a machine for the preparation of hot beverages according to claim 15.

For a better understanding of the invention, an embodiment thereof will be described hereafter only by way of non-limitative example, and with reference to the accompanying drawings, in which:
- figure 1 is a longitudinal section view, with parts removed for clarity, of a valve made according to the present invention and in opening position;
- figure 2 is a longitudinal section view, with parts removed for clarity, of the valve in figure 1 in closing position;
- figure 3 is a diagrammatic view of a machine for the preparation of hot beverages provided with a valve made according to the present invention; and
- figure 4 is a graph qualitatively showing the pressure curve in time in the feeding pipe of the valve in figure 1 arranged in the machine in figure 3.

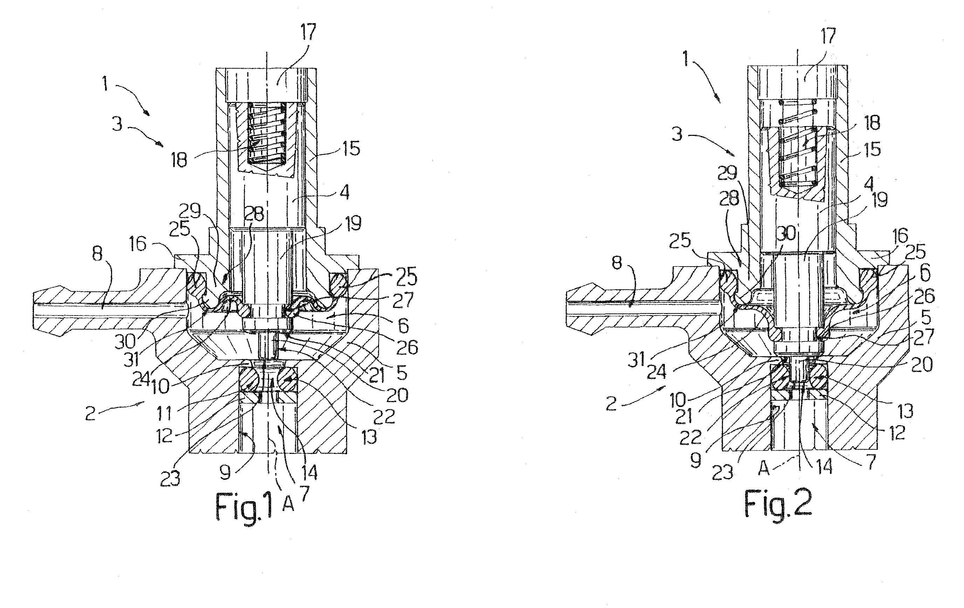

With reference to figures 1 and 2, numeral 1 indicates as a whole a fluid feed valve in an electric household appliance. The valve 1 is of the normally closed type, mainly extends along an axis A, and comprises a valve body 2 assembled onto a structure 3, which supports a slider 4 mobile between the opening position (figure 1) and the closing position (figure 2).

The valve body 2 comprises a cup-shaped body 5 which defines a chamber 6, and is arranged to be coupled to the structure 3; a feeding pipe 7 which leads into the chamber 6; and a delivery pipe 8 which leads into the chamber 6.

The feeding pipe 7 is defined by a hole 9 of axis A in the valve body 2. Along the hole 9, at the confluence of the feeding pipe 7 with the chamber 6 in the cup-shaped body 5, there is arranged a shoulder ring 10, which is integrally obtained in the valve body 2 and presents a smaller diameter than the diameter of the hole 9. The valve body 2 comprises an annular o-ring type seal 11, which is abuttingly arranged against the ring 10 and is maintained in such a position by a stop ring 12, which is driven by interference into the hole 9. The seal 11 presents an oval section annular wall 13, which defines a passage section 14 of the fluid along the feeding pipe 7.

From the constructive point of view, the seal 11 may be fixed into the feeding pipe 7 by means of any tool suitable to prevent sliding of the same along the axis A. For example, according to a variant (not shown), the shoulder ring 10 may be driven into the hole 9, while the stop ring 12 may be integrally made in the valve body 2. According to a further variant (not shown), the seal 11 is inserted in an annular groove made in the feeding pipe 7.

With reference to figure 1, the structure 3 comprises a cylinder 15 coaxial to the axis A and adapted to slidingly guide the slider 4 along the axis A; a flange 16 which extends from the cylinder 15, and is adapted to couple with the valve body 2; a lid 17 fastenable inside the cylinder 15; and a spring 18, which is compressed between the slider 4 and the lid 17.

The slider 4 presents an elongated body 19, which extends inside the chamber 6 of the valve body 2 and from which an appendix-shaped shutter 20 extends. The shutter 20 is adapted to be selectively inserted in a passage section 14 defined by the annular wall 13. The elongated body 19 presents a flat face 21, which is adapted to be abuttingly arranged against the cup-shaped body 5, in the case in point against the support ring 10, which defines the stopper position in the closed position of the valve 1. The flat face 21 is arranged in the chamber 6 both in the opening position and in the closing position.

The shutter 20 presents a cylindrical side face 22 having a larger diameter than the diameter of the passage section 14 so that the coupling between the shutter 20 and the wall 13 is an interference coupling; and an end face 23 on which the pressure of the fluid acts (in the closing position in figure 1) so as to overcome the contrast force exerted by the spring 18 and in part by the friction between the shutter 20 and the annular wall 13. In the opening position in figure 2, the fluid pressure also acts on the flat face 21 of the elongated body 19, which in the case in point presents an annular shape, and not only on the end face 23. In other words, the pressure of the fluid to maintain the valve 1 in the opening position is considerably lower than the pressure of the fluid needed to displace the shutter 20 from the closing position to the opening position.

The valve 1 further comprises an annular membrane 24, which is arranged in the chamber 6 and has the function of preventing the access of the fluid into the coupling zone between the slider 4 and the cylinder 15. The membrane 24 is externally delimited by an external seal 25 secured between the valve body 2 and the structure 3, and is internally delimited by an internal seal 26, which is arranged in an annular groove 27 which extends about the elongated body 19.

The cylinder 15 presents a segment 28 which extends beyond the flange 16 and into the chamber 6. The segment 28 presents a first cylindrical portion 29 and a second flared portion 30, which protrudes outwards. The portions 29 and 30 are delimited by a smooth curved face 31 adapted to be arranged in contact with the membrane 24. The external seal 25 is enclosed between the portions 29 and 30, the cup 6 and the annular flange 16. Furthermore, in the first opening position (figure 1) the membrane 24 is arranged in contact with the cylinder 15 without interfering with corners so as to preserve its integrity.

In use, the valve 1 is normally in the closing position, in which the shutter 20 is maintained in the passage section 14 inside the annular wall 13 by the spring 18 which acts directly on the slider 4. The increase of the pressure of the fluid in the feeding pipe 7 beyond a threshold value P1 adapted to overcome the antagonist force of the spring 18 and the friction between the shutter 20 and the wall 13 determines the displacement of the shutter 20 in the opening position in figure 2. The valve 1 remains in the opening position until the pressure of the fluid in the chamber 6 drops under a threshold value P2 lower than P1. The ratio between P1 and P2 is correlated to the ratio between the square of the radius R1 of the flat face 21 and the square of the radius R2 of the end face 23 of the shutter 20. In this manner, it is possible to select, in terms of design, the ratio between R1 and R2 and thus the ratio between P1 and P2.

In the above-described case in point, the end face 23 and the flat face 21 are perpendicular to the axis A, however alternative forms are possible, in these cases in order to determine the ratio between the surfaces it is necessary to refer to the projection of the faces 21 and 23 on a plane perpendicular to the axis A.

Furthermore, by adjusting the position of the lid 17 along the axis A it is possible to vary the force exerted by the spring 18 and thus the threshold values P1 and P2.

A further advantage of the valve 1 consists in the fact that the shutter 20 rubs against the walls 13 and in this manner scrapes off the possible deposit of limescale from the walls 13 and the shutter 20 itself.

Furthermore, the membrane 24 protects the coupling between cylinder 15 and slider 4 from the deposit of limescale.

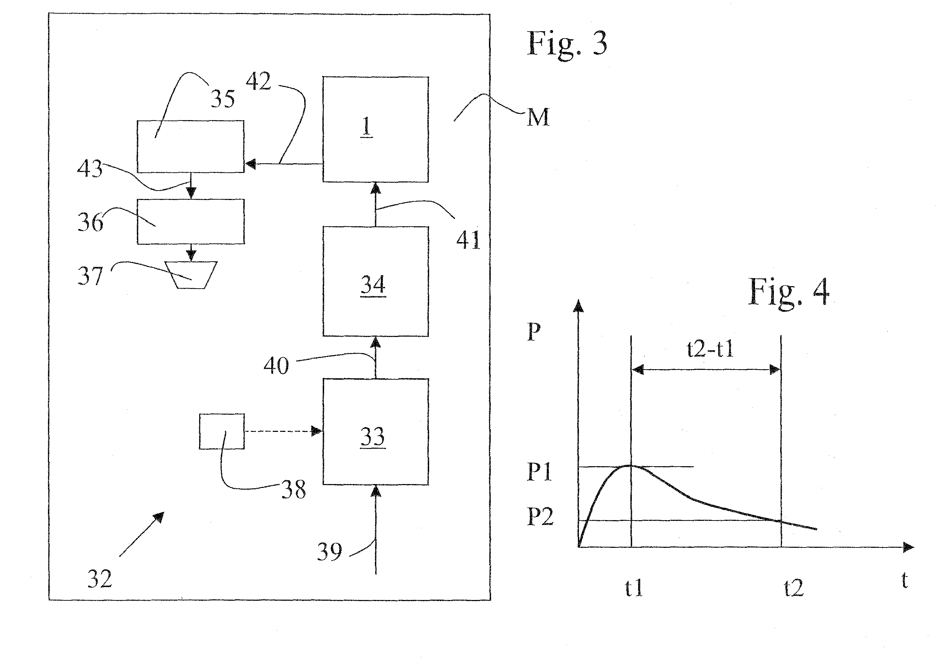

Referring to figure 3, the valve 1 is diagrammatically shown arranged in a machine M for the preparation of hot beverages, which comprises a circuit 32, along which there are arranged in sequence a water feeding pump 33; a boiler 34; the valve 1; a dispenser 35; a pod 36 containing coffee or other soluble powder; and a dispensing spout 37 of the espresso coffee or other hot beverage prepared with the use of pods.

The pump 33 is actuated by an actuator 38, which may be a motor, a solenoid or other actuator capable of actuating the pump 33 for an interval of time adapted to provide the necessary amount of water and at a pressure suitable for preparing the selected beverage ("caffè ristretto", "caffè lungo", cappuccino, tea, etc.). The selection of the features of the beverage determines the actuation range of the pump 33. The pump 33 takes the water from a tank (not shown in the accompanying figures) through a branch 39, and feeds the pressurized water to the boiler 34 along a branch 40. The boiler 34 generates steam or heats the water up to a temperature close to 100°C and feeds the valve 1 through the branch 41. Since the branch 41 is closed by the valve 1, the pressure increases in the branch 41. When the pressure of the steam or of the hot water exceeds the threshold value P1, the valve 1 is arranged in the opening position (figure 1), while when the pressure drops under the threshold value P2, the valve 1 is arranged in the closing position (figure 2). With reference to figure 4, since the threshold value P1 is considerably higher than the threshold value P2, the valve 1 remains in the opening position for an interval of time equal to t2-t1, where t1 is the opening instant of the valve 1, and t2 is the closing instant of the valve 1.

In the opening interval of the valve 1, the steam or hot water is fed to the dispenser 35 through the branch 42. The dispenser 35 in turn feeds the steam or hot water to the pod 36 through the branch 43. The steam or hot water by crossing the pod 36 makes the beverage which is conveyed from the spout 37 into a container (not shown in the accompanying figures).

The valve 1 allows to calibrate the threshold values P1 and P2 so that the opening range of the valve 1 is proportional to the actuating range of the actuator 38, in this manner the amount of steam fed to the dispenser 35 is that needed for the preparation of the beverage. The use of the valve 1 in the circuit 32 allows to eliminate an anti-drip valve and a check valve which, in the traditional circuits, are arranged along the branch 43 and along the branch 42, respectively. Dripping is avoided by the valve 1 which sends steam at a pressure higher than the threshold pressure P2, while the function of check valve calibrated at the value P2 is performed by the valve 1. The same valve 1 may be installed as a safety valve on the same circuit with a third threshold valve higher than the first threshold value P1 by varying the position of the lid 17 and the pre-compression of the valve 18.

## Claims

1. A fluid feed valve; the valve (1) comprising a valve body (2); a feeding pipe (7) having a passage cross section (14); a delivery pipe (8); and a chamber (6) obtained in the valve body (2) and to which the feeding pipe (7) and the delivery pipe (8) lead; a slider (4) mobile along an axis (A); a shutter (20) coupled to the slider (4) and adapted to close the feeding pipe (7); an elastic element (18) for maintaining the shutter (20) in the closing position; the valve (1) being **characterized in that** the slider (4) and the shutter (20) are shaped so as to be displaced along the axis (A) from a closing position to an opening position only by the pressure of the fluid in the feeding pipe (7) and to be maintained in the opening position only by the pressure of the fluid inside the chamber (6).

2. A valve according to claim 1, **characterized in that** the passage section (14) is delimited by an annular wall (13) of the feeding pipe (7) and **in that** the shutter (20) is insertable in the passage section (14) in contact with the annular wall (13); and **in that** the slider (4) presents an elongated body (19) arranged at least in part inside the chamber (6); the shutter (20) being an appendix which departs from one side (21) of the elongated body (19).

3. A valve according to claim 2, **characterized in that** the annular wall (13) is elastically yielding and the shutter (20) is couplable by interference with the annular wall (13).

4. A valve according to claim 3, **characterized in that** the annular wall (14) is formed by an annular rubber seal (11).

5. A valve according to any of claims from 2 to 4, **characterized in that** it comprises a guiding element (15) for guiding the slider (4) along the axis (A); and a lid (17) fixed to the guiding element (15); the elastic element (18) being arranged between the slider (4) and the lid (17).

6. A valve according to claim 5, **characterized in that** the elastic element (18) is in contact with the slider (4) on one side and with the lid (17) on the opposite side.

7. A valve according to claim 5 or 6, **characterized in that** the lid (17) is fixed to the guiding element (15) in selectively adjustable manner along the axis (A) so as to vary the force exerted by the elastic element (18) on the slider (4).

8. A valve according to any of the preceding claims, **characterized in that** it is free from any actuation requiring contribution of energy except for the pressure of the fluid fed along the feeding pipe (7).

9. A valve according to any of the preceding claims, **characterized in that** it comprises a membrane (24), which comprises an internal seal (26) fixed to the slider (4).

10. A valve according to any of claims from 7 to 9, **characterized in that** the membrane (24) comprises an external seal (25) fixed to the valve body (2).

11. A valve according to claim 10, **characterized in that** the external seal (25) is secured between the valve body (2), the guiding element (15) and a flange (16) integral with the guiding element (15).

12. An actuating method of a fluid feed valve; the valve (1) comprising a valve body (2); a feeding pipe (7) having a passage cross section (14); a delivery pipe (8); and a chamber (6) obtained in the valve body (2) and to which the feeding pipe (7) and the delivery pipe (8) lead; a slider (4) mobile along an axis (A); a shutter (20) coupled to the slider (4) and adapted to close the feeding pipe (7); an elastic element (18) for maintaining the shutter (20) in the closing position; the method contemplating feeding pressurized fluid along the feeding pipe (7); the method being **characterized in that** the slider (4) and the shutter (20) are displaced along the axis (A) from a closing position to an opening position only by means of the fluid pressure in the feeding pipe (7) when the fluid pressure is higher than a first threshold value (P1); and **in that** the slider (4) and the shutter (20) are maintained in the opening position in virtue of the fluid pressure in the chamber (6) when the fluid pressure in the chamber (6) is higher than a second threshold value (P2) lower than the first threshold value (P1).

13. A machine for the preparation of hot beverages; the machine comprising a circuit (32) for feeding a fluid to a pod (36); the circuit (32) comprising a pump (33) for pumping the pressurized fluid; a boiler (34) for heating the pressured fluid; a pressurized fluid dispenser (35); the circuit being **characterized in that** it contemplates a valve (1) according to any of the preceding claims; said valve (1) being arranged between the boiler (34) and the dispenser (35).

14. A machine according to claim 13, **characterized in that** the valve (1) is directly connected to the dispenser (35) by a first connecting branch (42) free from further valves.

15. An actuating method of a machine for the preparation of hot beverages according to claim 13 or 14, **characterized in that** only the actuating time of the pump (33) is adjusted in order to vary the opening time (t2-t1) of the valve (1).
